# NEW EUROPEAN PATENT SPECIFICATION

(11) **EP 0 259 842 B2**
(45) Date of publication and mention of the opposition decision: **05.06.2002**
(45) Mention of the grant of the patent: 24.11.1993
(21) Application number: 87113130.6
(22) Date of filing: 08.09.1987
(51) Int. Cl.: C09J 123/00, C08F 255/02, C08L 33/04

(54) **Aqueous pressure sensitive adhesive compositions**
Wässrige Selbstklebstoffe
Compositions aqueuses d'adhésifs sensibles à la pression

(30) Priority: 09.09.1986 US 905593
(43) Date of publication of application: 16.03.1988
(73) Proprietor: S.C.JOHNSON COMMERCIAL MARKETS, INC., Sturtevant, Wisconsin 53177-0902 (US)
(72) Inventor: Frazee, Glenn R., Kenosha, WN 53140 (US)
(74) Representative: Ebner von Eschenbach, Jennifer

(56) References cited:
- EP-A- 0 130 080
- EP-A- 0 173 300
- EP-A- 0 379 652
- BE-A- 641 599
- JP-B- 3 734 883
- Handbook of Pressure-Sensitive Adhesive Technology, edited by Donatas Satas, 1982, p. 298-326
- Encyclopedia of Polymer Science and Engineering, S. 1-3
- Römpp Chemie Lexikon, S. 2984

## Description

The present invention relates to aqueous pressure sensitive adhesive compositions.

Pressure sensitive adhesives (PSAs) are a class of adhesive compositions which are applied with pressure, usually finger pressure, and generally do not undergo a liquid to solid transition in order to hold materials together. PSAs can be solvent-free natural or synthetic resins having a viscoelastic property termed tack. Tack is a property characterized by the rapid wetting of a substrate by a polymer to form an adhesive bond upon brief contact with the substrate under light pressure. Typical applications for PSAs include pressure-sensitive tapes, labels, decals, decorative vinyls, laminates, wall coverings and floor tiles.

The early pressure sensitive tapes used adhesives that were based on organic solvent solutions of natural or synthetic rubber, tackified by a resinous material. Later, the rubber in pressure sensitive adhesives was replaced with styrene-butadiene block copolymers. More recently, the polyacrylates have gained wide acceptance in pressure sensitive adhesive formulations due to their clarity and resistance to oxidation and sunlight.

Acrylic copolymer PSAs are available as solution or aqueous polymer emulsions and may also be solid hot melt pressure sensitive adhesives.

The anionic and nonionic emulsifiers generally employed in acrylic emulsion polymerization protect the soft pressure sensitive polymers from impact coalesence during the reaction and stabilize the latex for satisfactory mechanical and storage stability. However, the emulsifiers do have adverse effects on pressure sensitive adhesive properties. The emulsifiers employed in emulsion polymerization adversely affect water resistance, tack and adhesion properties of polymer emulsion adhesives.

Canadian Patent 814,528 discloses low molecular weight alkali soluble resins, resin cuts and methods for their preparation and purification. The resins are disclosed as being especially useful as emulsifiers, leveling agents and film-formers. The number average molecular weight of the resins range from 700-5000 and the resins have acid numbers between 140 and 300. The resins are disclosed as emulsifiers in the preparation of polymer emulsions resulting in polymer emulsions which are stable and substantially free from coagulum. For use as an emulsifier in emulsion polymerization reactions, the resins must have a number average molecular weight between 1,000 and 2,000 and preferably between 1,000 and 1,500. Resins having a number average molecular weight greater than 2,000 result in the unstable and coagulated polymer emulsions when used as the emulsifier in emulsion polymerization reactions.

The object of the present invention is to provide a pressure sensitive adhesive composition having substantially Newtonian-like flow characteristics.

The present invention provides an adhesive composition comprising an aqueous polymer emulsion, characterized by the combination of water and about 30-60% by weight of a polymer comprising at least 1 vinyl monomer wherein at least 40% of said vinyl monomer is an alkyl acrylate or alkyl methacrylate, and characterized in that said polymer is prepared by:
(a) polymerizing a first monomer charge comprising at least one vinylic monomer selected from the group consisting of styrene, alpha methyl styrene, tetraethylene glycol diacrylate, hydroxyethyl methacrylate, methylmethacrylate, ethylacrylate, methylacrylate, propylacrylates, propylmethacrylates, hexylacrylates, hexylmethacrylates and vinyl acetate which is suitable for emulsion polymerization in the presence of a surfactant, and an initiator to initiate emulsion polymerization of said first monomer charge and, thereafter,
(b) adding to the polymerization mixture at least one resin, said one resin being selected from ethylenically unsaturated monomers such as olefins, mono vinylidene aromatics, alpha, beta-ethylenically unsaturated carboxylic acids and esters thereof and ethylenically unsaturated dicarboxylic anhyrides, water dispersible or water dispersed polyurethanes, aliphatic polyurethane containing 30% solids, water dispersible copolymers of ethylene and acrylic acid, and vinyl monomers selected from one or more of acrylic acid and esters and derivatives thereof, methacrylic acid and esters and derivatives thereof, styrene, alphamethyl styrene, vinyl toluene, ethylene, polyesters and urethanes said resin having a molecular weight ranging from 500 to 20,000;
(c) said composition having a viscosity of less than 3,500 centipoise.

The present invention provides advantages over known acrylic copolymer adhesives by providing improved pressure-sensitive adhesive formulations having (a) fine particle size emulsions, (b) emulsion viscosities which can be varied from low to high with no sacrifice in stability, (c) emulsion viscosities which are stable under high shear conditions encountered in roll coating operations (Newtonian-like flow characteristics) and (d) low foam production which is desirable in roll coating operations.

The acrylic polymer emulsion prepared according to these procedures can be used neat as pressure sensitive adhesives or can be admixed with standard pressure sensitive adhesive ingredients such as dyes, preservatives, tackifiers, perfumes, coalescing solvents and leveling aids.

The acrylic pressure sensitive adhesives according to the present invention have excellent flow, coating and leveling characteristics especially on low energy surfaces and on high speed equipment. The present acrylic polymer emulsions are characterized by near Newtonian flow and are slightly translucent.

Briefly, in accordance with the present invention, an improved aqueous acrylic pressure sensitive adhesive is prepared by using an acrylic polymer emulsion made in the presence of a support resin. The acrylic polymer emulsion is a polymer containing one or more vinylic monomers wherein at least 40% by weight of the polymer is an alklacrylate or alkylmethacrylate. The support resin can be any water or alkali soluble, or water or alkali dispersible polymer having a number average molecular weight of from 1,000 to 20,000.

Briefly, the adhesives of the present invention are prepared by adding a resin to an emulsion polymerization reaction mixture during the polymerization reaction. The resin is a low molecular weight polymer and is soluble or dispersible in water or alkali solutions. The emulsion polymerization reaction mixture contains any monomer which can be employed in emulsion polymerization reactions. The resin is added to the reaction mixture during the emulsion polymerization process, i.e., after initiation of the emulsion polymerization reaction but before the polymerization reaction is substantially completed. The resulting resin-fortified polymer emulsions possess substantially Newtonian rheological properties, improved stability and good wetting properties.

The resins are added to the emulsion polymerization reaction mixture as solutions, solids (such as flakes or granules), or as slurries (suspension of solids in water). When the resin is added as a solid, either as flakes, granules or a slurry, then an alkaline material is added to the reaction mixture in a quantity sufficient to solubilize the resin. The monomer component of the emulsion polymerization reaction can be introduced into the reaction mixture all at once or portions of the monomer component can be added to the reaction mixture at various times, i.e., multistage monomer addition. In either case, the monomers are usually added to the reaction mixture slowly over a 1/2 hour to 2 hour period.

A number of preferred embodiments of the invention will now be described in greater detail.

When used herein the term "polymer emulsion" refers to any polymer prepared by emulsion polymerization. Such polymers are formed by the polymerization of one or more monomers capable of undergoing free radical emulsion polymerization. When used herein the term "resin" encompasses all low molecular weight polymers of from 500 to 20,000, and preferably 500 to 10,000, number average molecular weight, which are soluble or dispersible in water, alkali or water in the presence of a co-solvent. Examples of suitable cosolvents include the ketones such as methylethylketone, glycols such as ethylene glycol, glycol ethers such as the ethylene glycol C 1-4 alkyl ethers, alcohols such as isopropyl alcohol, n-butyl alcohol, amides such as dimethylformamide, and pyrrolidones such as N-methyl-2-pyrrolidone .

In preparing the adhesive compositions of the present invention, an emulsion polymerization process is conducted wherein a low molecular weight resin is added to an emulsion polymerization reaction mixture during the emulsion polymerization process. The resin is added to the emulsion polymerization reaction mixture after polymerization has been initiated but before the emulsion polymerization reaction is substantially complete. The resin can be added as a solid, a solution or slurry. The monomers employed in the emulsion polymerization process can be added to the reaction mixture in a single stage or, alternatively, can be added to the reaction mixture in a multi-stage addition.

In conducting the present emulsion polymerization reaction standard emulsion polymerization techniques are employed with the exception of the in situ resin addition. Standard nonionic and anionic surfactants are employed in the process. Advantageously, the reaction can be conducted at an elevated temperature of from 60 to 100°C., at ambient pressure and under an inert atmosphere such as nitrogen. Also low temperature polymerization can be used with appropriate initiators such as redox initiators. The reaction mixture is maintained under agitation employing standard mixing techniques.

Preferably, before the resin is added to the emulsion polymerization reaction mixture there must be a stabilizer present in the reaction mixture to prevent coagulation of the emulsion particles. The stabilizer can be any of the conventional nonionic surfactants such as ethoxylated alkylphenols including ethoxylated nonylphenol having at least 20 ethylene oxide units, ethoxylated octylphenol having at least 20 ethylene oxide units or, alternatively, functional monomers such as acrylic acid, methacrylic acid or polyethylene glycol monomethacrylate. The stabilizer may be added to the reaction mixture prior to resin addition and usually in amount of from about 1 to about 8 percent by weight of the reaction mixture and preferably from 2 to 4 weight percent.

It is also desirable to use a small percentage of at least one conventional emulsion polymerization surfactant. Acceptable surfactants are well-known to those skilled in the art of emulsion polymerization. These include nonionic surfactants such as the octyl- and nonyl-phenol ethoxylates having 15 or less moles of ethylene oxide, as well as the ethylene oxide/propylene oxide block copolymers with less than 3.5 moles ethylene oxide and propylene oxide combined and the like and nonionic surfactants such as sodium tridecyl ether sulfonate, sodium lauryl sulfate, and the like. Only a small percentage of surfactant is necessary, on the order of 0.25 to 5% by weight. It is preferred to include 0.25 to 1.00 by weight of surfactant.

The resin is added to the emulsion polymerization reaction mixture as a solution, solid (flakes or granules) or as a slurry. If the resin is added as a solid, then a sufficient amount of alkaline material must be added to the reaction mixture in order to solubilize the resin. The method of addition of the resin to the reaction mixture is not critical to the practice of the present invention and the resin may be introduced into the reaction mixture all at once or in portions over time during the emulsion polymerization reaction.

The monomers employed in the emulsion polymerization are preferably added to the reaction mixture in two or more stages. Typically, a small amount of monomer is added to the mixture of water and surfactant with agitation. Thereafter the initiator is added to the reaction mixture followed by the addition of another portion of the monomer mix and the steric stabilizer. The polymerization reaction is then started. After the polymerization reaction has started, the low molecular weight resin is then added to the reaction mixture. After the addition of the resin, the balance of the monomer mix is added to the reactor and the emulsion polymerization reaction is allowed to go to completion.

Suitable low molecular weight support resins employed in the practice of the present invention include any solution or bulk polymerized polymers prepared from ethylenically unsaturated monomers such as olefins, mono vinylidene aromatics, alpha, beta-ethylenically unsaturated carboxylic acids and esters thereof and ethylenically unsaturated dicarboxylic anhydrides. They are known materials and are prepared employing standard solution polymerization techniques. Preferably, the support resins are prepared in accordance with the teachings of U.S. Patent 4,414, 370, U.S. Patent 4,529,787 and U.S. Patent 4,546,160 all of which are incorporated herein by reference.

Other suitable commercially available resins include water dispersed or water dispersible aliphatic polyurethanes such as Spensol L52 an aliphatic polyurethane with 30% solids commercially available from Spencer Kellogg, and Upaco 2854, a water dispersible polyurethane available from Upaco Adhesives, Inc., and water dispersible copolymers of ethylene with about 20% acrylic acid such as the Primacors from Dow Chemical, specifically Primacor 4990, a 34.2% aqueous dispersion of a copolymer of ethylene and about 20% acrylic acid having a melt index of 1300 and Primacor 4983, a 25% aqueous dispersion of a copolymer of ethylene and about 20% acrylic acid having a melt index of 300. Solid Primacor resins are also available from Dow Chemical and can be dispersed in water and alkali. Suitable solid Primacors include Primacor 5990, Primacor 5980 and the like. The molecular weight of the Primacor resins are less than 20,000 number average. Also usable are water dispersible modified polyesters such as Eastman AQ55D molecular weight 18,000 available from Eastman Chemical Co. These and other similar resins can be used especially where the desirable characteristics of the resin, i.e., flexibility, durability, etc., are required. These resins should be low molecular weight with a number average molecular weight of from 1000 to 20,000.

The support resin may be comprised of one or more vinyl monomers, i.e., acrylic acid and esters and derivatives thereof, methacrylic acid and esters and derivatives thereof, styrene, alphamethyl styrene, vinyl toluene and the like, as well as ethylene, polyesters, urethanes and the like. The resin must be soluble or dispersible either in water or in an alkali solution. The molecular weight of the support resin should be in a range of from 1,000 to 20,000, and advantageously from 5,000 to 20,000 and preferably from 5,000 to 15,000. The percentage of total solids the support resins represent in the final emulsion is from 10 to 40% by weight and preferably from 10 to 25% by weight.

The acrylic polymer component of the present adhesive represents from 60 to 90% by weight of the total solids. The term "solids" when used herein, refers to the total weight of non-volatile components. The acrylic polymer emulsion of the present invention is a polymer comprising one or more vinylic monomers wherein at least 40% by weight of the polymer is an alkyl acrylate or alkyl methacrylate monomer or mixtures of alkyl acrylate or alkyl methacrylate monomers having an alkyl group with from 2 to 20, and preferably 4 to 10, carbon atoms. Preferred alkylacrylate monomers include 2-ethylhexylacrylate (2-EHA) and butylacrylate (BA) isooctylacrylate (IOA) lauryl methacrylate (LMA), isodecylacrylate (IDA) or mixtures thereof.

The vinylic monomers employed in the acrylic emulsion polymer in addition to alkylacrylate can be any vinylic monomer. These vinylic monomers are copolymerized with the alkylacrylate to modify the properties of the resulting pressure sensitive adhesives according to the end-use applications and are readily determinable to one skilled in the art. Divinyl monomers can be used to increase the molecular weight and the internal strength of the polymer backbone and are generally employed in amounts less than about 7% by weight of the acrylic polymer. Suitable vinylic monomers employed in the practice of the present invention include styrene (ST), alpha methyl styrene (AMS), tetraethylene glycol diacrylate (TEGDA), hydroxyethyl methacrylate (HEMA), methylmethacrylate (MMA), ethylacrylate (EA), methylacrylate (MA), propylacrylates (PA), propylmethacrylates (PMA), hexylacrylates (HA), hexylmethacrylates (HMA), and vinyl acetate.

The total solids of the acrylic polymer emulsion can vary from 30 to 60 weight percent based on the total weight of the emulsion mixture. Advantageously, the total solids content is from 30-58 and preferably 40-53% by weight.

In one method to prepare the adhesive compositions of the present invention, water and a sufficient amount of surfactant are added to a reactor under an inert atmosphere and brought to reaction temperature. The monomer mixture and the initiator are then co-fed into the reactor with agitation. The monomer mixture may be added all at once or, alternatively, it can be fed into the reactor over an extended period of time, i.e., 1-2 hours. After the initiator addition, a low molecular weight resin is then added to the reaction mixture during the polymerization process. The resin can be added to the reaction mixture as a solid or a solution. when the resin is added as a solid, an alkali such as aqueous NH₄OH is added to the reaction mixture with the solid resin or after the addition of the solid resin. The time at which the support resin is added to the reaction mixture is not critical to the practice of the present invention, however, it is preferred that the reaction of the monomers be at least about 30%, preferably 30% to 50% complete before the resin is added to the reaction mixture. The support resin can be added immediately after the addition of the initiator and anytime up to an hour after of the monomer mixture and initiator have been added to the reaction mixture.

In another method to prepare the adhesive compositions of the present invention, water and sufficient amount of surfactant are added to a reactor under an inert atmosphere and brought to reaction temperature. A minor portion (0.1-15% by weight) of the monomer mixture to be used in the emulsion polymerization reaction is added to the reactor followed by the addition of an initiator. A second portion (25-90 weight percent) of the monomer mixture is then added slowly over a 1 to 2 hour period to the reaction mixture. After the addition of this second portion of monomer, the support resin is added to the reaction mixture as either a solid or a solution. After the addition of the resin, a third portion (5-75 percent by weight) of the monomer mixture is added slowly to the reaction mixture over a 1/4 to 1 hour period. If the support resin is added as a solid then aqueous alkali is simultaneously added to the reactor during the addition of the third portion of monomer mixture. The reaction is then held at reaction temperature with agitation for an additional 1 to 2 hour period.

In another method to prepare the adhesive compositions of the present invention, water and a sufficient amount of surfactant are added to a reactor under an inert atmosphere and brought to the reaction temperature. A minor portion (1/50-1/10) of the monomer mixture is added to the reactor followed by the addition of an initiator. The reaction is held for 5 minutes and then the balance of the monomer mixture is slowly added to the reactor over a 1 to 2 hour period. A support resin is then added to the reaction mixture anytime up to an hour after all of the monomer mixture has been added to the reactor. If the support resin is added as a solid, then a sufficient amount of alkali must be added to the reaction mixture to solublize the solid resin. The reaction mixture is then held for an additional one to two hours at elevated temperature.

In yet a fourth method of preparing the emulsion, similar to the above three methods, includes the co-feeding of a portion of the monomers along with the resin or low molecular weight polymers. All other conditions are similar.

For those methods where the resin and alkali are added with some of the monomers, the precharge should contain all of the monomers which will be solubilized by the alkali, i.e., acid containing monomers such as acrylic acid. If this is not done, the acid functional monomer may go into the aqueous phase and will not be available for reaction with the rest of the monomers which are not water soluble.

Once prepared, the present acrylic polymer emulsions can be used neat as pressure sensitive adhesives. Alternatively, other pressure sensitive adhesive ingredients can be added to the present acrylic polymer emulsions to provide a pressure sensitive adhesives with desired properties. These pressure sensitive adhesive ingredients include trackifiers, dyes, preservatives, leveling aids, coalescing solvents, perfumes, and the like. These optional ingredients are well-known to one skilled in the art and are employed in concentrations readily determinable by one skilled in the art.

The PSA compositions of the present invention are used in any pressure sensitive adhesive application. Such applications include, tapes, stickers, labels, decals, decorative (especially wood grain) vinyls, laminates, wall coverings and floor tiles. The present acrylic polymer emulsion PSAs have substantially Newtonian-like flow characteristics and have desirable flow, coating and leveling characteristics on low energy surfaces. Additionally, the present acrylic polymer emulsion PSAa are useable on high speed equipment.

The following ingredients are admixed to prepare one preferred embodiment of the present invention:

| Ingredients | Weight % | |
|---|---|---|
| | Range | Preferred |
| Support resin | | |
| 80 Ethylene/20 AA Mₙ 20,000 (Primacor 4983) | 0.5 - 2.5 | 11 - 20 |
| Ammonia | 0.4 - 4 | 0.75 - 2 |
| Nonionic surfactant | 0,1 - 2 | 0.25 - 0.75 |
| Initiator | 0.01 - 2 | 0.01 - 2 |
| Monomer mixture (at least 40% 2-EHA) | 14.25 - 57 | 35 - 50 |
| Water | Balance | Balance |

In another preferred embodiment, the support resin comprises a BA/AA/ST copolymer having an Mₙ of between 2,000 and 2,500 and a BA/AA/ST weight ratio of about 70/15/15 or 60/25/15, respectively and the acrylic polymer emulsion comprises at least 70 weight percent 2-EHA in combination with any one or more of the following monomers: BA, ST, AMS, MMA, HEMA and up to about 7 percent by weight MMA.

The following examples illustrate the practice of the present invention but should not be construed as limiting its scope. All percentages are by weight unless specified otherwise.

### Example 1

A polymer adhesive composition having the following formulation was prepared:

### PART A

329.1 grams deionized water; 12 grams sodium tridecyl ether sulfonate (Sipex EST - 30% actives); 3.6 grams octylphenol ethoxylate - 10 moles ethylene oxide (Triton X-100).

### PART B

0.5 grams acrylic acid; 1.4 grams methylmethacrylate; 8.7 grams butylacrylate; 2.9 grams 2-ethylhexylacrylate.

### PART C

2.5 grams ammonium persulfate; 20 grams deionized water.

### PART D

10.3 grams acrylic acid; 25.6 grams methylmethacrylate; 165.5 grams butylacrylate; 55.2 grams 2-ethylhexylacrylate.

### PART E

57.1 grams deionized water;

### PART F

10 grams ammonium hydroxide; 50 grams deionized water;

### PART G

180 grams Primacor 4983 (a 25% aqueous dispersion with ammonia of copolymer of ethylene with about 20% acrylic acid (Mₙ approximately 20,000 - Dow Chemical Company).

### PART H

18 grams methylmethacrylate; 7.2 grams hydroxyethyl methacrylate; 116.1 grams butylacrylate; 38.7 grams 2-ethylhexylacrylate.

The emulsion is prepared by mixing Parts A and B in a reaction vessel which has been purged with nitrogen and is stirred at approximately 200-250 rpm and heated to 80 ° C. Part C is then added, followed in 5 minutes by the beginning of the Part D primary feed. Part D is fed over a period of 50 minutes. After 1/4 of the Part D feed is in, add Part E. Approximately 15 minutes after the feed of Part D is completed, add Part F over 10 minutes. Immediately after Part F is added, add Part G over a period of approximately 20 minutes, and add Part H over a period of 40 minutes. After all of Part H is in, the material is held for approximately 1 hour at 80 ° C, cooled and filtered.

The above emulsion has a pH in the range of 8.5-9 and with a non-volatile content of 44-47% by weight and a viscosity of 300-500 centipoise. Generally, the particle size is very fine with no trash particles over 25 microns and very few visible under 25 microns. When it is preferred to have adhesive properties the above emulsion is performed as follows.

The peel tests were performed by Pressure Sensitive Tape Council Test PSTC-1 with a residence time as and temperature as shown in Table 1.

**TABLE I**

| PEEL TEST | | | |
|---|---|---|---|
| | Cure Time | Residence Time | Rating |
| Run A | 24 hours | 30 minutes | 4.7 pli A |
| Run B | 24 hours | 24 hours | 7.5 pli A |
| Run C | 1 week | 30 minutes | 6.0 pli A |
| Run D | 1 week | 24 hours | 6.0 pli A |
| Run E | 24 hours | 1 week* | 8.2 pli C+A |
| Run F | 1 week* | 30 minutes | 3.5 pli A |

| | | | |
|---|---|---|---|
| *All cure times and residence times were run at room temperature except for those marked with an "*" which were run at 70°C. | | | |

### The probe tack test was performed as follows:

Polyken Probe Tack (A-1-1) using Polyken Probe Tack tester from TMI Inc. The Loop Tack Test was performed on an Instron Tensile Tester using a 5" loop of 1" wide tape allowed to contact a stainless steel plate until 1 square inch of tape is on the plate and immediately withdrawn at rate of 12"/minute. Probe Tack 24 hour cure: 648 grams; Tack 1 week Cure 661 grams; Probe Tack 1 week cure at 70 ° C: 622 grams; Loop Tack 1 week cure: 2.5 pounds.

The shear tests were performed as follows:
PSTC-7 with the following configuration: 1/2 inch by 1 inch contact area with a 1 kg. weight, the long axis orientation was parallel to the applied stress. The results were as follows: 24 hour cure - 272 minutes; 1 week cure - 325 minutes; 1 week cure at 70°C - greater than 10,000 minutes with no slip.

### Example 2

Using the procedure of Example 1, the following emulsion was prepared:

### PART A

324.2 grams water, 18 grams Sipex EST, 9.0 grams Triton X-100.

### PART B

2.7 grams styrene, 1.6 grams methylmethacrylate; 2.7 grams butylacrylate; 20 grams 2-ethylhexylacrylate.

### PART C

2.5 grams ammonium persulfate; 20 grams water.

### PART D

24.3 grams styrene, 14.6 grams methylmethacrylate; 23 grams butylacrylate, 179.8 grams 2-ethylhexylacrylate.

### PART E

57.1 grams deionized water.

### PART F

157.5 grams of a resin having a monomer content of 15% styrene, 15% acrylic acid, 70% butylacrylate, a weight average molecular weight of 4,140 and a number average molecular weight of 2,410 prepared using the process of U. S. Patent 4,529,787.

### PART G

18 grams styrene, 18 grams butylacrylate, 144 grams 2-ethylhexylacrylate.

### PART H

94 grams of water.

### PART I

15 grams NH₄OH.

When tested for peel, shear and tack, the above emulsion gave adequate pressure sensitive adhesive properites.

### Example 3

Using the procedures of Example 1, a pressure-sensitive adhesive emulsion having the following formulation was prepared.

### PART A

324.1 grams water, 12 grams Sipex EST, 3.6 grams Triton X-100.

### PART B

.5 grams acrylic acid, 2.7 grams vinyl acetate, 7.7 grams butylacrylate, 2.6 grams 2-ethylhexylacrylate. .04 grams ditertiary butyl peroxide.

### PART C

2.5 grams ammonium persulfate, 20 grams deionized water.

### PART D

10.3 grams acrylic acid, 51.3 grams vinyl acetate, 146.2 grams butylacrylate, 48.7 grams 2-ethylhexylacrylate, 0.66 grams ditertiary butyl peroxide.

### PART E

57.1 grams deionized water.

### PART F

10 grams NH₄OH, 50 grams deionized water.

### PART G

161 grams Eastman AQ55D, a low molecular weight modified polyester resin available from Eastman Chemical Company molecular weight of 18,000.

### PART H

99.6 grams butylacrylate, 34.2 grams 2-ethylhexylacrylate, 7.2 grams hydroxyethyl acrylate, 46 grams vinylacetate.

When tested as in Example 1, the above resin had good pressure sensitive adhesive properties.

## Claims

1. An adhesive composition comprising an aqueous polymer emulsion, **characterized by** the combination of water and 30-60% by weight of a polymer comprising at least 1 vinyl monomer wherein at least 40% of said vinyl monomer is an alkyl acrylate or alkyl methacrylate, and **characterized in that** said polymer is prepared by:
(a) polymerizing a first monomer charge comprising at least one vinylic monomer selected from the group consisting of styrene, alpha methyl styrene, tetraethylene glycol diacrylate, hydroxyethyl methacrylate, methylmethacrylate, ethylacrylate, , methylacrylate, propylacrylates, propylmethacrylates, hexylacrylates, hexylmethacrylates and vinyl acetate which is suitable for emulsion polymerization in the presence of a surfactant,. and an initiator to initiate emulsion polymerization of said first monomer charge and, thereafter,
(b) adding to the polymerization mixture at least one support resin, said one support resin being selected from ethylenically unsaturated monomers such as olefins, mono vinylidene aromatics, alpha, beta-ethylenically unsaturated carboxylic acids and esters thereof and ethylenically unsaturated dicarboxylic anhyrides, water dispersible or water dispersed polyurethanes, aliphatic polyurethane containing 30% solids, water dispersible copolymers of ethylene and acrylic acid, and vinyl monomers selected from one or more of acrylic acid and esters and derivatives thereof, methacrylic acid and esters and derivatives thereof, styrene, alphamethyl styrene, vinyl toluene, ethylene, polyesters and urethanes said resin having a molecular weight ranging from 500 to 20,000;
(c) said composition having a viscosity of less than 3,500 centipoise.

2. The adhesive composition of claim 1, **characterized in that** the alkyl acrylate or alkyl methacrylate is selected from the group consisting of 2-ethylhexylacrylate, butylacrylate, isooctylacrylate, isodecylacrylate, lauryl methacrylate, and mixtures thereof, and the alkyl acrylate or alkyl methacrylate comprises about 40 to 90% by weight of the polymer.

3. The adhesive of claim 1 or 2, **characterized in that** the resin has a number average molecular weight of less than 20,000.

4. The adhesive composition of claim 1, 2 or 3, **characterized in that** the support resin is a terpolymer of butylacrylate, acrylic acid and styrene.

5. The adhesive composition of claim 4, **characterized in that** the resin has a number average molecular weight of from 2,000 to 4,000.

6. The adhesive composition of claim 1, 2 or 3, **characterized in that** the support resin is a copolymer of acrylic acid and polyethylene.

## Patentansprüche

1. Klebstoffzusammensetzung umfassend eine wäßrige Polymeremulsion, **gekennzeichnet durch** die Kombination aus Wasser und 30-60 Gew.-% eines Polymers, welches mindestens 1 Vinylmonomer enthält, wobei mindestens 40 % des Vinylmonomers ein Alkylacrylat oder Alkylmethacrylat ist, und **dadurch** gekennzeichnet, daß das Polymer hergestellt wird **durch**:
(a) Polymerisation einer ersten Monomermenge, die mindestens ein Vinylmonomer umfaßt, das ausgewählt ist aus der Gruppe umfassend Styrol, α-Methylstyrol, Tetraethylenglycoldiacrylat, Hydroxyethylmethacrylat, Methylmethacrylat, Ethylacrylat, Methylacrylat, Propylacrylate, Propylmethacrylate, Hexylacrylate, Hexylmethacrylate und Vinylacetat, und das geeignet ist zur Emulsionspolymerisation in Gegenwart eines Tensids, sowie einen Initiator, der die Emulsionspolymerisation der ersten Monomermenge in Gang bringt, und dann,
(b) Zugabe von mindestens einem Trägerharz zu dem Polymerisationsgemisch nach Beginn der Emulsionspolymerisationsreaktion, aber noch bevor die Emulsionspolymerisationsreaktion im wesentlichen beendet ist, wobei das eine Trägerharz ausgewählt ist aus ethylenisch ungesättigten Monomeren wie zum Beispiel Olefinen, Monovinyliden-Aromaten, α-, β-ethylenisch ungesättigte Carbonsäuren und Ester derselben und ethylenisch ungesättigte Dicarbonsäureanhydride, in Wasser dispergierbare oder in Wasser dispergierte Polyurethane, 30 % Feststoffe enthaltendes aliphatisches Polyurethan, in Wasser dispergierbare Copolymere von Ethylen und Acrylsäure, und Vinylmonomere, die ausgewählt sind aus einem oder mehreren von Acrylsäure und Estern und Derivaten derselben, Methacrylsäure und Ester und Derivate derselben, Styrol, α-Methylstyrol, Vinyltoluol, Ethylen, Polyester und Urethane, wobei das Harz ein Molekulargewicht im Bereich von 500 bis 20.000 besitzt;
(c) wobei die Zusammensetzung eine Viskosität von weniger als 3.500 Centipoise besitzt.

2. Klebstoffzusammensetzung nach Anspruch 1, **dadurch gekennzeichnet, daß** das Alkylacrylat oder Alkylmethacrylat ausgewählt ist aus der Gruppe umfassend 2-Ethylhexylacrylat, Butylacrylat, Isooctylacrylat, Isodecylacrylat, Laurylmethacrylat und Mischungen derselben, und daß das Alkylacrylat oder Alkylmethacrylat etwa 40 bis 90 Gew.-% des Polymers ausmacht.

3. Klebstoff nach Anspruch 1 oder 2, **dadurch gekennzeichnet, daß** das Harz ein Molekulargewicht-Zahlenmittel von weniger als 20.000 besitzt.

4. Klebstoffzusammensetzung nach Anspruch 1, 2 oder 3, **dadurch gekennzeichnet, daß** das Trägerharz ein Terpolymer von Butylacrylat, Acrylsäure und Styrol ist.

5. Klebstoffzusammensetzung nach Anspruch 4, **dadurch gekennzeichnet, daß** das Harz ein Molekulargewicht-Zahlenmittel von 2.000 bis 4.000 besitzt.

6. Klebstoffzusammensetzung nach Anspruch 1, 2 oder 3, **dadurch gekennzeichnet, daß** das Trägerharz ein Copolymer von Acrylsäure und Polyethylen ist.

## Revendications

1. Composition adhésive comprenant une émulsion aqueuse de polymère, **caractérisée par** la combinaison d'eau et de 30 à 60% en poids d'un polymère comprenant au moins un monomère vinylique où au moins 40% dudit monomère vinylique sont constitués d'un acrylate d'alkyle ou d'un méthacrylate d'alkyle, et **caractérisée en ce que** ledit polymère est préparé par
(a) polymérisation d'une première charge monomère comprenant au moins un monomère vinylique choisi dans le groupe constitué par le styrène, l'alpha-méthylstyrène, le diacrylate de tétraéthylèneglycol, le méthacrylate d'hydroxyéthyle, le méthacrylate de méthyle, l'acrylate d'éthyle, l'acrylate de méthyle, les acrylates de propyle, les méthacrylates de propyle, les acrylates d'hexyle, les méthacrylates d'hexyle et l'acétate de vinyle, convenant à la polymérisation en émulsion en présence d'un agent tensioactif, et d'un amorceur pour amorcer la polymérisation en émulsion de la dite première charge monomère, et ensuite
(b) addition au mélange de polymérisation d'au moins une résine support après l'amorçage de la réaction de polymérisation en émulsion mais avant que la réaction de polymérisation en émulsion soit sensiblement totale, ladite résine support étant choisie parmi les monomères à insaturation éthylénique comme les oléfines, les aromatiques monovinylidéniques, les acides carboxyliques à insaturation alpha, bêta-éthylénique et leurs esters et les anhydrides dicarboxyliques à insaturation éthylénique, les polyuréthanes dispersibles dans l'eau ou dispersés dans l'eau, un polyuréthane aliphatique contenant 30% de matières sèches, les copolymères dispersibles dans l'eau d'éthylène et d'acide acrylique et les monomères vinyliques choisis parmi un ou plusieurs de l'acide acrylique et ses esters et dérivés, l'acide méthacrylique et ses esters et dérivés, le styrène, l'alpha-méthylstyrène, le vinyltoluène, l'éthylène, les polyesters et les uréthanes, ladite résine ayant une masse moléculaire comprise dans la gamme de 500 à 20000 ;
(c) ladite composition ayant une viscosité inférieure à 3500 centipoises.

2. Composition adhésive selon la revendication 1, **caractérisée en ce que** l'acrylate d'alkyle ou le méthacrylate d'alkyle est choisi dans le groupe constitué de l'acrylate de 2-éthylhexyle, l'acrylate de butyle, l'acrylate d'isooctyle, l'acrylate d'isodécyle, le méthacrylate de lauryle et leurs mélanges, et l'acrylate d'alkyle ou le méthacrylate d'alkyle constitue environ 40 à 90% du poids du polymère.

3. Adhésif selon la revendication 1 ou 2, **caractérisé en ce que** la résine a une masse moléculaire moyenne en nombre inférieure à 20000.

4. Composition adhésive selon la revendication 1, 2 ou 3, **caractérisée en ce que** la résine support est un terpolymère d'acrylate de butyle, d'acide acrylique et de styrène.

5. Composition adhésive selon la revendication 4, **caractérisée en ce que** la résine a une masse moléculaire moyenne en nombre de 2000 à 4000.

6. Composition adhésive selon la revendication 1, 2 ou 3, **caractérisée en ce que** la résine support est un copolymère d'acide acrylique et de polyéthylène.
